# EUROPEAN PATENT APPLICATION

(11) **EP 4 322 704 A1**
(43) Date of publication of application: **14.02.2024**
(21) Application number: 23189241.5
(22) Date of filing: 02.08.2023
(51) Int. Cl.: H04W 76/40

(54) **PDU SESSION STATUS IE HANDLING FOR MBS**

(30) Priority: 11.08.2022 US 202263371116 P; 21.07.2023 US 202318224733
(71) Applicant: MediaTek Inc., Hsin-Chu 300 (TW)
(72) Inventor: LIN, Yu-Hsin, 30078 Hsinchu City (TW); CHEN, Chi-Hsien, 30078 Hsinchu City (TW); LIN, Yuan-Chieh, 30078 Hsinchu City (TW)
(74) Representative: Hoefer & Partner Patentanwälte mbB

(57) **Abstract**

A method for handling a PDU session status IE for MBS when the PDU session status IE indicates that the PDU session is inactive is provided. A UE receives a service accept or a service reject message from the network, which comprises a PDU session status IE indicating that a PDU session is inactive. Accordingly, the UE locally releases the PDU session if the PDU session is active, and determines if the PDU session is associated with one or more MBS sessions. If so, the UE locally leaves the associated MBS sessions. The PDU session can be a single access PDU session or a multiple access PDU session.

## Description

### Field of the Invention

The disclosed embodiments relate generally to wireless communication, and, more particularly, to a method for PDU session status IE handling for Multicast Broadcast Services (MBS) in 5G systems.

### Background of the Invention

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless networks, such as GSM, CDMA, and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board has decided to focus the future NGMN activities on defining the end-to-end requirements for 5G new radio (NR) systems.

In 5G/NR, a protocol data unit (PDU) session defines the association between the UE and the data network that provides a PDU connectivity service. The PDU session establishment is a parallel procedure of PDN connection (bearer) procedure in 4G/LTE. Each PDU session is identified by a PDU session ID (PSI), and may include multiple QoS flows and QoS rules. Each PDU session can be established via a 5G access network (e.g.,3GPP radio access network (RAN), or via a non-3GPP access network). Both the network and the UE can initiate different PDU session procedures, e.g., PDU session establishment procedure, PDU session modification procedure, and PDU session release procedure, for managing PDU sessions.

Operators are seeking ways to balance data traffic between mobile cellular networks and non-3GPP access in a way that is transparent to users and reduces mobile network congestion. In 5GS, UEs that can be simultaneously connected to both 3GPP access and non-3GPP access (using 3GPP NAS signalling), thus the 5GS is able to take advantage of these multiple accesses to improve the user experience, optimize the traffic distribution across various accesses. Accordingly, 3GPP introduced Multi-Access (MA) PDU session in 5GS. A MA PDU session uses one 3GPP access network or one non-3GPP access network at a time, or simultaneously one 3GPP access network and one non-3GPP access network.

Multimedia Broadcast and Multicast Service (MBMS) is a broadcasting service offered via existing GSM and UMTS cellular networks. Recently, evolved MBMS (E-MBMS) has been introduced in the LTE specification for broadcasting or multicasting TV, films, and other information such as overnight transmission of newspapers in a digital form. In 5G networks, Multicast and Broadcast Services (MBS) is a point-to-multipoint service that can improve the network efficiency and user experience when transmitting the same content to multiple users. The design principle of 5G MBS is to minimize the implementation impact of the feature by reusing as much as possible 5G unicast architecture and functions.

5MBS (5G Multicast and Broadcast Services) should be used only when the associated PDU or MA PDU session is active. SMBS session is only available for 3GPP access in 5GS. A PDU session status information element (IE) is an IE that is used to synchronize PDU session status between the UE and the network. The network or the UE will locally release the PDU session when the PDU session status IE indicates that the PDU session is inactive. It is undefined how network or UE handles the MBS session associated with the released PDU session when the PDU session status IE indicates that the PDU session is inactive.

A solution is sought.

### Summary of the Invention

As will be seen more clearly from the detailed description following below, a method is disclosed herein. The method for handling a PDU session status IE for MBS when the PDU session status IE indicates that the PDU session is inactive is provided. From UE perspective, a UE receives a service accept or a service reject message from the network, which comprises a PDU session status IE indicating that a PDU session is inactive. Accordingly, the UE locally releases the PDU session if the PDU session is active, and determines if the PDU session is associated with one or more MBS sessions. If so, the UE locally leaves the MBS session. From NW perspective, a network entity receives a service request, a notification response, or a control plane service request message from UE, which comprises a PDU session status IE indicating that a PDU session is inactive. Accordingly, NW locally releases the PDU session if the PDU session is active, and NW further determines if the PDU session is associated with one or more MBS sessions. If so, then NW considers UE as removed from the MBS session.

In another aspect of the invention, a claimed UE is disclosed in the detailed description here below, the UE receives a service accept message or a service reject message in a 5G network, wherein the service accept or reject message carries a PDU session status IE indicating a PDU session has a status of PDU SESSION INACTIVE. The UE locally releases the PDU session upon determining that the PDU session is active at the UE side. The UE determines the PDU session is associated with one or more multicast broadcast services (MBS) sessions. The UE locally leaves the one or more MBS sessions upon releasing the PDU session.

In another aspect of the invention, a claimed network is disclosed in the detailed description here below, the network entity (AMF/SMF) receives a request message or a response message from a User Equipment (UE) in a 5G network, wherein the request or response message carries a PDU session status IE indicating a status of a PDU session is PDU SESSION INACTIVE. The network entity locally releases the PDU session upon determining that the PDU session is active at the network. The network entity determines the PDU session is associated with one or more multicast broadcast services (MBS) sessions. The network entity considers the UE is removed from the one or more MBS sessions upon releasing the PDU session.

Other embodiments and advantages are described in the detailed description below. This summary does not purport to define the invention. The invention is defined by the claims.

### Brief Description of the Drawings

The accompanying drawings, where like numerals indicate like components, illustrate embodiments of the invention.
Figure 1 illustrates an exemplary 5G network supporting Multicast Broadcast Services (MBS) and handling PDU session status IE indicating PDU SESSION INACTIVE in accordance with one novel aspect.
Figure 2 illustrates simplified block diagrams of a user equipment (UE) and a network entity in accordance with embodiments of the current invention.
Figure 3 illustrates one embodiment of handling a PDU session status IE for a single access PDU session from UE perspective in accordance with one novel aspect.
Figure 4 illustrates one embodiment of handling a PDU session status IE for a single access PDU session from network perspective in accordance with one novel aspect.
Figure 5 illustrates one embodiment of handling a PDU session status IE for a multiple access PDU session from UE perspective in accordance with one novel aspect.
Figure 6 is a flow chart of a method of UE handling PDU session status IE for MBS when the PDU session status IE indicates that the PDU session is inactive in accordance with one novel aspect of the present invention.
Figure 7 is a flow chart of a method of NW handling PDU session status IE for MBS when the PDU session status IE indicates that the PDU session is inactive in accordance with one novel aspect of the present invention.

### Detailed Description

Reference will now be made in detail to some embodiments of the invention, examples of which are illustrated in the accompanying drawings.

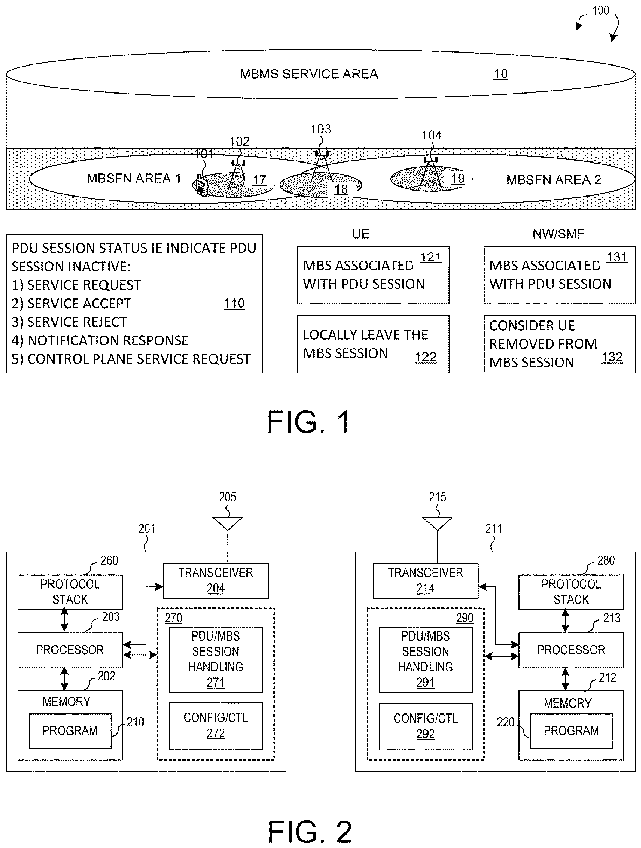

Figure 1 illustrates an exemplary 5G network 100 supporting Multicast Broadcast Services (MBS) and corresponding PDU session establishment procedures in accordance with one novel aspect. 5G new radio (NR) network 100 includes a user equipment (UE) 101 and a plurality of base stations gNB 102, gNB 103, and gNB 104. MBS service area 10 covers multiple MBS Single Frequency Network (MBSFN) areas (e.g., MBSFN area 1 and MBSFN area 2). An MBSFN area comprises a group of cells within an MBSFN service area of a network that are coordinated to achieve MBSFN transmission. An MBSFN service area is defined as an area of network in which all base stations (gNBs) can be synchronized to perform MBSFN transmission. MBS service areas are capable of supporting one or more MBSFN areas. On a given frequency layer, an eNB can only belong to one MBS service area. Under the MBS service area, a cell can belong to one or more MBSFN areas and support MBS services for all the belonging MBSFN areas. In Figure 1, gNB 102 belongs to MBSFN area 1 and serves cell 17 for MBS service over a component carrier (CC), gNB 103 belongs to both MBSFN area 1 and area 2 and serves cell 18 for MBS service over the CC, gNB 104 belongs to MBSFN area 2 and serves cell 19 for MBS service over the CC. UE 101 registers to a PLMN, and subscribes to a specific MBS service in cell 17 served by gNB 102.

EPS networks are packet-switched (PS) Internet Protocol (IP) networks. When a UE joins an evolved packet system (EPS) network, a Packet Data Network (PDN) address (i.e., the one that can be used on the PDN) is assigned to the UE for its connection to the PDN. In 4G, EPS has defined a Default EPS Bearer to provide the IP Connectivity that is Always-On. In 5G, a PDU session establishment procedure is a parallel procedure of a PDN connection procedure in 4G. A PDU session defines the association between the UE and the data network that provides a PDU connectivity service. Each PDU session is identified by a PDU session ID, and can be established over a 3GPP RAN, and/or over a non-3GPP access network for radio access.

5G session management (5GSM) for PDU sessions over both 3GPP access and non-3GPP access are managed by AMF (Access management function) and SMF (Session management function) via NAS signaling. UE can request to join an MBS session by using PDU session establishment procedure or PDU session modification procedure with the *Requested MBS container* IE for the following MBS operations: Join MBS session and Leave MBS session. The network can also apply the PDU session establishment procedure or PDU session modification procedure with the *Received MBS container* IE for the following operations/decisions: MBS service area update, MBS join is accepted, MBS join is rejected, and Remove UE from the MBS session.

In 5G networks, 5MBS (5G MBS) is a point-to-multipoint service that can improve the network efficiency and user experience when transmitting the same content to multiple users. The design principle of 5G MBS is to minimize the implementation impact of the feature by reusing as much as possible 5G unicast architecture and functions. 5MBS should be used only when the associated PDU or MA PDU session is active. PDU session status IE is an IE that is used to synchronize PDU session status between the UE and the network. The network or the UE will locally release the PDU session when the PDU session status IE indicates that the PDU session is inactive. However, it is undefined how network or UE handles the MBS session associated with the released PDU session when the PDU session status IE indicates that the PDU session is PDU SESSION INACTIVE in the following messages: service request, service accept, service reject, notification response, control plane service request.

In accordance with one novel aspect, a method of handling a PDU session status IE for MBS when the PDU session status IE indicates that the PDU session is inactive is provided. From UE perspective, UE 101 receives a service accept or a service reject message from the network, which comprises a PDU session status IE indicating that a PDU session is inactive (110). Accordingly, UE 101 locally releases the PDU session if the PDU session is active, and UE 101 further determines if the PDU session is associated with one or more MBS sessions (121). If so, then UE 101 locally leaves the MBS session (122). From NW/SMF perspective, NW/SMF receives a service request, a notification response, or a control plane service request message from UE 101, which comprises a PDU session status IE indicating that a PDU session is inactive (110). Accordingly, NW/SMF locally releases the PDU session if the PDU session is active, and NW further determines if the PDU session is associated with one or more MBS sessions (131). If so, then NW/SMF considers UE 101 as removed from the MBS session (132).

Figure 2 illustrates simplified block diagrams of wireless devices, e.g., a UE 201 and a network entity 211 in accordance with embodiments of the current invention. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes PDU session handling circuit 291 that handles PDU establishment, modification, and release procedures, and configuration and control circuit 292 that provides different parameters to configure and control UE of related functionalities including PDU and MBS session management.

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network.

In one example, control function modules and circuits 270 includes a PDU/MBS session handling circuit 271 that performs PDU session establishment, modification, and release procedures with the network, and a config and control circuit 272 that handles configuration and control parameters for mobility management and session management. In one example, the 5GS MBS capable UE 201 joins an MBS session associated with a PDU session, and later receives a PDU session status IE indicating that the PDU session is inactive in a service accept or reject message. In response, UE 201 locally releases the PDU session, and locally leaves the MBS session because the PDU session is associated with the PDU session.

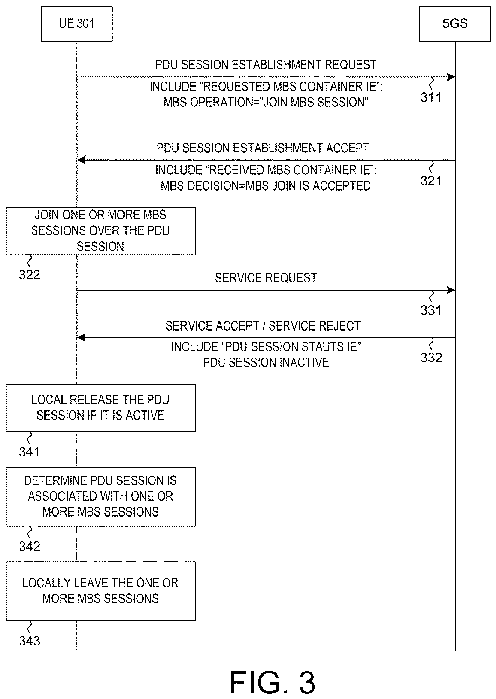

Figure 3 illustrates one embodiment of handling a PDU session status IE for a single access PDU session from UE perspective in accordance with one novel aspect. In step 311, UE 301 initiates a PDU session establishment procedure by sending a PDU session establishment request message to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". In step 321, the network sends a PDU session establishment accept message, which includes a "Received MBS Container IE", with an MBS decision = "MBS join is accepted" + TMGI + optionally Source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NR CGI list or both". Upon receiving the PDU session establishment accept message, the PDU session is established and is associated with the MBS session. In step 322, UE 301 joins the MBS session and receives MBS services over the associated PDU session.

In step 331, UE 301 sends a service request message to the network to request user-plane resources. In response, in step 332, UE 301 receives a service accept or service reject message from the network. The service accept or reject message comprises a PDU status IE, which indicates that the PDU session is in PDU SESSION INACTIVE state. In step 341, UE 301 locally releases the PDU session if the PDU session is still active at the UE side. In step 342, UE 301 determines whether the PDU session is associated with any MBS session. If so, then in step 343, UE 301 locally leaves the MBS session. Since 5MBS should be used only when the associated PDU session is active, UE thus needs to leave the MBS session once the associated PDU session is inactive and released.

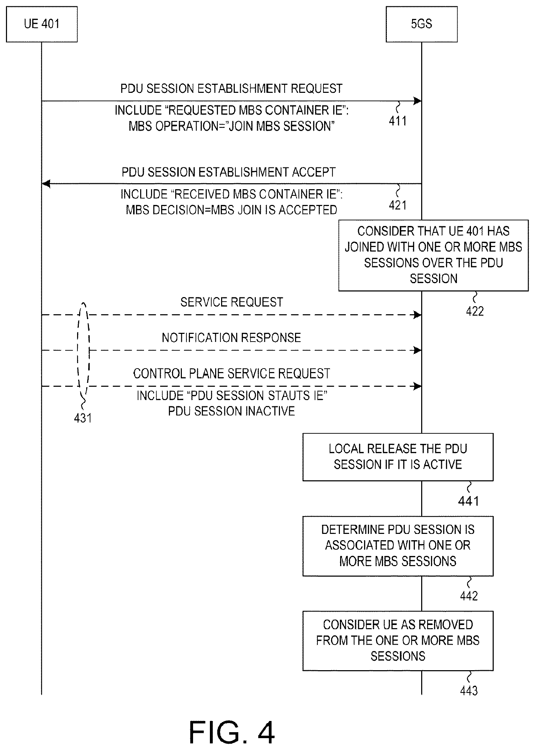

Figure 4 illustrates one embodiment of handling a PDU session status IE for a single access PDU session from network perspective in accordance with one novel aspect. In step 411, UE 401 initiates a PDU session establishment procedure by sending a PDU session establishment request message to the network, e.g., the session management function (SMF). The PDU session establishment request message includes a "Requested MBS container IE", with an MBS option = "Join MBS Session" + MBS Session ID type = "TMGI" or MBS Session ID type = "source specific IP multicast address" + MBS Session ID = "TMGI" or MBS Session ID = "corresponding address". In step 421, the network sends a PDU session establishment accept message, which includes a "Received MBS Container IE", with an MBS decision = "MBS join is accepted" + TMGI + optionally source IP address information and Destination IP address information = "corresponding address". The accept message may also include Received MBS information: MBS start time, MBS security container, MBS service area = "MBS TAI list, the NE CGI list or both". The accept message may also include MBS service area = "MBS TAI list, the NR CGI list or both". Upon sending the PDU session establishment accept message, the PDU session is established and is associated with the MBS session. In step 422, the network considers that UE 401has joined the MBS session and is receiving MBS services over the associated PDU session.

In step 431, UE 401 sends a service request message, or a notification response message, or a control plane service request message to the network to sync PDU session status. The service message comprises a PDU status IE, which indicates that the PDU session is in PDU SESSION INACTIVE state. In step 441, the network locally releases the PDU session if the PDU session is still active at the NW side. In step 442, the network determines whether the PDU session is associated with any MBS session. If so, then in step 443, the network considers that UE 401 is removed from the associated MBS session.

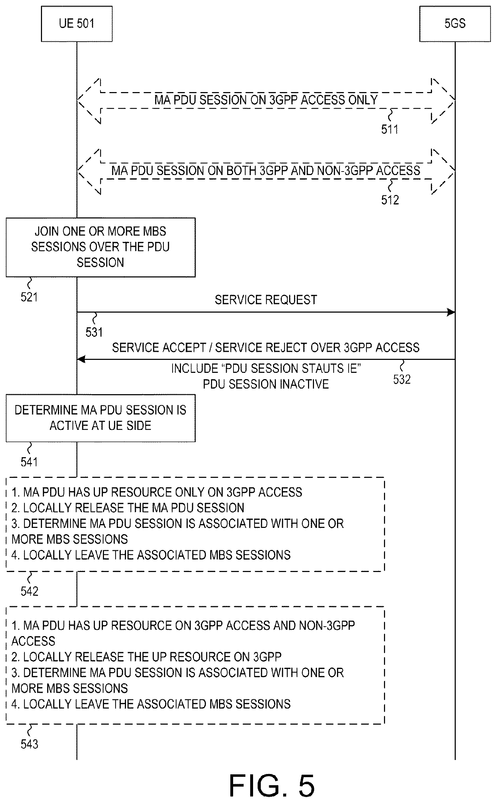

Figure 5 illustrates one embodiment of handling a PDU session status IE for a multiple access PDU session from UE perspective in accordance with one novel aspect. In step 511, UE 501 establishes an MA PDU session, user plane resource is established on 3GPP access only for the MA PDU session. Alternatively, in step 512, UE 501 establishes an MA PDU session, user plane resource is established on both 3GPP access and non-3GPP access for the MA PDU session. In step 521, UE 501 joins one or more MBS sessions and receives MBS services over the associated MA PDU session.

In step 531, UE 501 sends a service request message to the network to sync PDU session status. In response, in step 532, UE 501 receives a service accept or service reject message from the network. The service accept or reject message comprises a PDU status IE, which indicates that the MAPDU session is in PDU SESSION INACTIVE state. In step 541, UE 501 determines that the MA PDU session is still active at the UE side. In a first example (542), the MA PDU session has user plane resource established on 3GPP access only, so UE 501 locally releases the user plane resource and the entire MA PDU session. UE 501 also determines whether the MA PDU is associated with any MBS session, if so, then UE 501 locally leaves the associated MBS sessions. In another example (543), the MA PDU session has user plane resource established on 3GPP access and on non-3GPP access, so UE 501 locally releases the user plane resource on 3GPP access without releasing the entire MA PDU session. UE 501 also determines whether the MA PDU is associated with any MBS session, if so, then UE 501 locally leaves the associated MBS sessions.

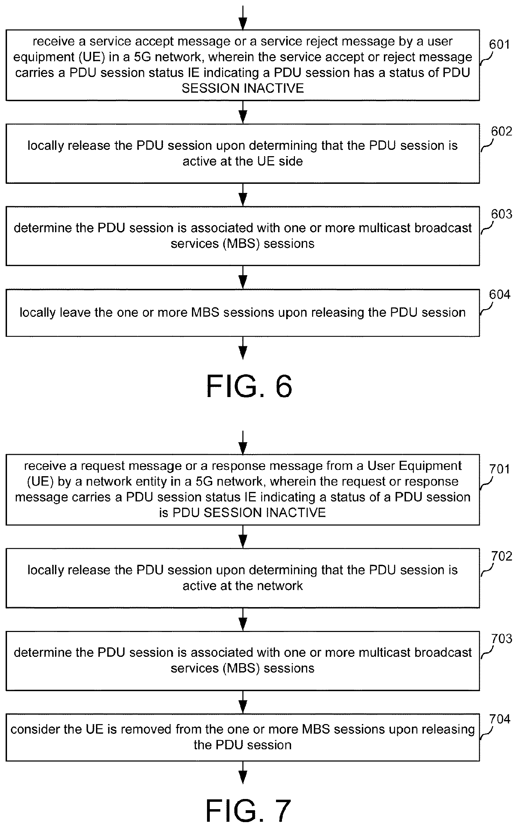

Figure 6 is a flow chart of a method of UE handling PDU session status IE for MBS when the PDU session status IE indicates that the PDU session is inactive in accordance with one novel aspect of the present invention. In step 601, a UE receives a service accept message or a service reject message in a 5G network, wherein the service accept or reject message carries a PDU session status IE indicating a PDU session has a status of PDU SESSION INACTIVE. In step 602, the UE locally releases the PDU session upon determining that the PDU session is active at the UE side. In step 603, the UE determines the PDU session is associated with one or more multicast broadcast services (MBS) sessions. In step 604, the UE locally leaves the one or more MBS sessions upon releasing the PDU session.

Figure 7 is a flow chart of a method of NW handling PDU session status IE for MBS when the PDU session status IE indicates that the PDU session is inactive in accordance with one novel aspect of the present invention. In step 701, a network entity (AMF/SMF) receives a request message or a response message from a User Equipment (UE) in a 5G network, wherein the request or response message carries a PDU session status IE indicating a status of a PDU session is PDU SESSION INACTIVE. In step 702, the network entity locally releases the PDU session upon determining that the PDU session is active at the network. In step 703, the network entity determines the PDU session is associated with one or more multicast broadcast services (MBS) sessions. In step 704, the network entity considers the UE is removed from the one or more MBS sessions upon releasing the PDU session.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, **characterized by** comprising:
receiving a service accept message or a service reject message by a user equipment (UE) (201) in a 5G network (100), wherein the service accept or reject message carries a PDU session status IE indicating a PDU session has a status of PDU SESSION INACTIVE;
locally releasing the PDU session upon determining that the PDU session is active at the UE (201) side;
determining the PDU session is associated with one or more multicast broadcast services (MBS) sessions; and
locally leaving the one or more MBS sessions upon releasing the PDU session.

2. A User Equipment (UE) (201), **characterized by** comprising:
a receiver that receives a service accept message or a service reject message in a 5G network (100), wherein the service accept or reject message carries a PDU session status IE indicating a PDU session has a status of PDU SESSION INACTIVE;
a PDU session handling circuit that locally releases the PDU session upon determining that the PDU session is active at the UE (201) side;
a control circuit that determines the PDU session is associated with one or more multicast broadcast services (MBS) sessions; and
an MBS handling circuit that locally leaves the one or more MBS sessions upon releasing the PDU session.

3. The method of Claim 1 or the UE of Claim 2, **characterized in that** the PDU session is a single access PDU session.

4. The method of Claim 1 or the UE of Claim 2, **characterized in that** the PDU session is a multiple access PDU (MA PDU) session, and user plane resource is established on 3GPP access only.

5. The method or the UE of Claim 4, **characterized in that** the locally releasing the PDU session involves the UE locally releasing the user plane resource on 3GPP access and releasing the entire MA PDU session.

6. The method of Claim 1 or the UE of Claim 2, **characterized in that** the PDU session is a multiple access PDU (MA PDU) session, and user plane resource is established over both 3GPP access and non-3GPP access.

7. The method or the UE of Claim 6, **characterized in that** the locally releasing the PDU session involves the UE locally releasing the user plane resource on 3GPP access without releasing the entire MA PDU session.

8. A method, **characterized by** comprising:
receiving a request message or a response message from a User Equipment (UE) (201) by a network entity (211) in a 5G network (100), wherein the request or response message carries a PDU session status IE indicating a status of a PDU session is PDU SESSION INACTIVE;
locally releasing the PDU session upon determining that the PDU session is active at the network;
determining the PDU session is associated with one or more multicast broadcast services (MBS) sessions; and
considering the UE (201) is removed from the one or more MBS sessions upon releasing the PDU session.

9. The method of Claim 8, **characterized in that** the request message is a service request message or a control plane service request message.

10. The method of Claim 8, **characterized in that** the response message is a notification response message.

11. The method of Claim 8, **characterized in that** the PDU session is a single access PDU session.

12. The method of Claim 9, **characterized in that** the PDU session is a multiple access PDU session.

13. A network device (211), **characterized by** comprising:
a receiver for receiving a request message or a response message from a User Equipment (UE) (201) of a 5G network (100), wherein the request or response message carries a PDU session status IE indicating a status of a PDU session is PDU SESSION INACTIVE; and
a processor for locally releasing the PDU session upon determining that the PDU session is active, wherein the processor determines the PDU session is associated with one or more multicast broadcast services (MBS) sessions and considers the UE (201) is removed from the one or more MBS sessions upon releasing the PDU session.

14. The network device (211) of Claim 13, **characterized in that** the PDU session is a multiple access PDU (MA PDU) session, and user plane resource is established on 3GPP access only.

15. The network device (211) of Claim 13, **characterized in that** the PDU session is a multiple access PDU (MA PDU) session, and user plane resource is established over both 3GPP access and non-3GPP access.
